# EUROPÄISCHE PATENTSCHRIFT

(11) **EP 3 956 114 B1**
(45) Veröffentlichungstag und Bekanntmachung des Hinweises auf die Patenterteilung: **17.07.2024**
(21) Anmeldenummer: 20719619.7
(22) Anmeldetag: 16.04.2020
(51) Int. Cl.: B26D 7/14, B26D 7/02, B26D 7/06, B26D 7/08, A22C 17/00, B26D 7/01

(54) **SCHNEIDEMASCHINE ZUM AUFSCHNEIDEN EINES LAIBES IN SCHEIBEN**
CUTTING MACHINE FOR CUTTING A LOAF INTO SLICES
MACHINE À DÉCOUPER DESTINÉE À DÉCOUPER UNE MEULE EN TRANCHES

(30) Priorität: 16.04.2019 DE 102019110025
(43) Veröffentlichungstag der Anmeldung: 23.02.2022
(73) Patentinhaber: TVI Entwicklung und Produktion GmbH, 83052 Bruckmühl (DE)
(72) Erfinder: VÖLKL, Thomas, 83052 Bruckmühl (DE); ROTHENAICHNER, Dominik, 83052 Bruckmühl (DE)
(74) Vertreter: Weickmann & Weickmann PartmbB
(86) Internationale Anmeldenummer: PCT/EP2020/060682
(87) Internationale Veröffentlichungsnummer: WO 2020/212474

(56) Entgegenhaltungen:
- DE-A1- 102004 041 915
- DE-A1- 102004 041 915
- DE-A1- 102010 035 657
- DE-A1- 102010 035 657
- DE-U1- 202016 102 297

## Beschreibung

### I. Anwendungsgebiet

Schneidemaschinen zum Aufschneiden von Stücken aus elastischem Material in Scheiben werden vor allem in der Lebensmittel-Industrie benötigt.

### II. Technischer Hintergrund

Das aufzuschneidende Material kann insbesondere Fleisch oder Fisch oder ein anderes Lebensmittel sein.

Dabei ist zu unterscheiden zwischen
- einerseits länglichen Stücken mit über die Länge gleichbleibenden Querschnitt, so genannten Kalibern oder Strängen, in denen etwa Wurst oder Käse hergestellt wird
   und
- andererseits länglichen Stücken, bei denen sich der Querschnitt über deren Länge ändert, so genannten Laiben, wie etwa Stücke aus gewachsenem Fleisch.

Denn um daraus Scheiben etwa gleichen Volumens und damit gleichen Gewichts zu erzeugen, muss ein gleichmäßiges Kaliber lediglich immer um die gleiche Vorschubstrecke für das Abtrennen einer immer gleich dicken Scheibe vorwärts gefahren werden, wofür sogenannte Slicer bekannt sind, die die Scheiben mit einer sehr hohen Taktfrequenz abtrennen.

Bei ungleichmäßigen Laiben wird dies im Stand der Technik erreicht, indem der Laib zunächst in einem Formrohr mit über die Länge gleichbleibendem inneren Querschnitt so verpresst wird, dass er diesen Formrohr-Querschnitt möglichst vollständig ausfüllt, sodass der Laib in diesem verpressten Zustand einen über die Länge gleichen und bekannten Querschnitt, auch in seinen Endbereichen, besitzt.

Dann können durch Vorgeben der Scheiben-Dicke mittels Vorwärtsschieben aus dem Formrohr heraus und Abtrennen dieses Überstandes um jeweils eine solche Scheiben-Dicke etwa gewichtsgenaue Scheiben abgetrennt werden.

Dabei besteht das Problem, dass die Laibe zwar innerhalb einer Charge ähnliche Abmessungen aufweisen können, sich diese Abmessungen von Charge zu Charge jedoch sehr stark ändern können. Noch stärker können sich die Abmessungen abhängig vom Herkunftsort des Fleischstückes am Tier oder auch der Art des Tieres unterscheiden.

Deshalb ist es bekannt, in einem Formrohr-Revolver mehrere hinsichtlich ihres Querschnittes unterschiedlich große und/oder unterschiedlich geformte Formrohr-Öffnungen vorzusehen, die wahlweise benutzt werden können, und die darüber hinaus bei je zwei gleichen Formrohr-Öffnungen zusätzlich ein Beladen des eines der beiden Formrohre ermöglicht, während aus dem anderen Formrohr heraus momentan Scheiben aufgeschnitten werden.

Prinzipiell ist das Verpressen nicht nur in Längsrichtung sondern auch in Querrichtung des Laibes bereits bekannt, jedoch an einem Formrohr-Revolver nur schwierig zu realisieren.

Wenn zusätzlich für einen variablen Einsatz der Schneidemaschine auch Material mit einem starren, nicht elastischen, insbesondere in Längsrichtung verlaufenden, Anteil, wie etwa ein Fleischstück mit Knochen, z.B. ein Kotelett-Strang, aufschneidbar sein soll, wird dafür einerseits zwingend eine Quer-Verpressung benötigt, da ein solcher Kotelett-Strang sich in Längsrichtung nicht verpressen lässt, und es wird zusätzlich ein gezahntes Messer benötigt - im Gegensatz zu einem ungezahnten Messer bei knochenfreiem Material, um den Knochen zu zersägen.

Die Druckschrift DE 10 2004 041 915 A1, welche den nächstliegenden Stand der Technik bildet, offenbart eine Schneidemaschine gemäß dem Oberbegriff des Anspruchs 1. Ferner wird auf die DE 10 2010 035 657 A1, die DE 202016 102297 U1 und die DE 10 2016 122126 A1 hingewiesen.

### III. Darstellung der Erfindung

### a) Technische Aufgabe

Es ist daher die Aufgabe gemäß der Erfindung, eine gattungsgemäße Schneidemaschine so weiterzubilden, dass sie sehr variabel, auch zum Aufschneiden von knochigen Material sowie für andere Sonderfälle, verwendet werden kann trotz einfachem und kostengünstigen Aufbau.

### b) Lösung der Aufgabe

Diese Aufgabe wird durch die Merkmale des Anspruchs 1 gelöst. Vorteilhafte Ausführungsformen ergeben sich aus den Unteransprüchen.

Diese Aufgabe wird bei einer gattungsgemäßen Schneidemaschine mit einem Formrohr-Revolver dadurch gelöst, dass in dessen Formrohr-Öffnungen zusätzlich zur Längs-Verpressung auch eine Quer-Verpressung vorgesehen ist, indem zusätzlich zum Längs-Presstempel ein Quer-Pressstempel an oder in den Formrohr-Öffnungen vorhanden ist, welcher durch Verlagerung in radialer Richtung des Querschnittes dieser Formrohr-Öffnung in der Lage ist, deren Querschnitt zu verkleinern.

Vorzugsweise bewegt sich der Quer-Pressstempel dabei gleichzeitig in radialer Richtung des gesamten Formrohr-Revolvers.

Durch diese Quer-Verpressung können Laibe, die in Längsrichtung nicht elastisch sind aufgrund eines z.B. Knochenanteils, zumindest hinsichtlich ihres elastischen Anteiles in Querrichtung so verpresst werden, dass sich zumindest der elastische Anteil an die Innenwandung der Formrohr-Öffnung anlegt.

Vorzugsweise ist der Längspress- Antrieb und/oder der Querpress-Antrieb nur an einer bestimmten Umfangsposition in der Maschine bezüglich des Formrohr-Revolvers, nämlich der Schneidposition, an der auch das Aufschneiden des Laibes möglich ist, vorhanden.

Der jeweilige Quer-Pressstempel, der sich in der in Schneidposition befindlichen Formrohr-Öffnung befindet, kann mit dem Querpress-Antrieb gekoppelt werden, insbesondere automatisch beim Anfahren der Schneidposition durch den jeweiligen Quer-Pressstempel, sodass dann der Querpress-Antrieb aktiv ist und den Laib, der sich in der in Schneidposition befindlichen Formrohr-Öffnung befindet, querverpressen kann. Insbesondere drückt dabei der Querpress-Antrieb den Quer-Pressstempel in radialer Richtung bzgl. der Drehachse des Formrohr-Revolvers in den Querschnitt der Formrohr-Öffnung hinein, wobei sich der Quer-Pressstempel auf der radialen Außenseite der Formrohr-Öffnung befindet bzgl. der Drehachse des Formrohr-Revolvers.

Auch der Längspress-Antrieb zum Einfahren und Vorwärtsfahren des Längs-Pressstempels ist vorzugsweise nur an der Schneidposition vorhanden.

Da somit ohnehin nur in der Schneidposition verpresst werden kann, kann die Abfolge von Längs-Verpressen und Quer-Verpressen, die auch jeweils in Teilschritten durchgeführt werden kann, frei gewählt werden.

Die erfindungsgemäße Maschine umfasst ferner ein Messer.

Dabei kann es sich um ein linear bewegliches Messer handeln, insbesondere ein endloses bandförmiges einer Bandsäge oder ein endliches plattenförmiges Messer, welches intermittierend, insbesondere in Richtung seiner Schneidkante, hin und her bewegt wird.

Es kann sich auch um ein rotierendes Messer handeln, das insbesondere um eine parallel zur axialen Richtung verlaufende Messerachse rotiert und insbesondere einen kreisförmigen Umfang aufweist, der als Schneide ausgebildet ist,

rotierendes, kreisscheiben-förmiges Messer, dessen kreisförmiger Umfang als Schneide ausgebildet ist und eine gezahnte oder ungezahnte Schneide sein kann.

Falls es sich um ein kreisförmiges Messer handelt - also der Vorschub in den Laib hinein nicht durch die Messerform zur Verfügung gestellt wird wie bei einem Messer mit spiralförmiger Schneidkante, etwa einem Säbel-Messer - wird zum Abtrennen einer Scheibe die Messerachse relativ zum Formrohr-Revolver bewegt in vorzugsweise radialer Richtung.

Dabei ist der Bewegungsweg so gewählt, dass die Schneidkante des Messers dabei den gesamten Querschnitt der in der Schneidposition befindlichen Formrohr-Öffnung überstreichen kann, in axialer Richtung vorzugsweise unmittelbar vor dem Schneidende des Formrohr-Revolvers.

Zu diesem Zweck kann die Messerachse an einer Schwinge befestigt sein und diese eine Schwenkbewegung vollziehen, die auch einen radialen Anteil bzgl. der Drehachse des Formrohr-Revolvers besitzt, oder die Messerachse ist an einem Schlitten angeordnet, der linear verfahren werden kann in einer Richtung, die eine radiale Komponente bzgl. der Drehachse des Formrohr-Revolvers enthält.

Bei kraft-beaufschlagten Elementen können diese gesteuert sein hinsichtlich der zu erreichenden Position oder hinsichtlich der Höhe der beaufschlagenden Kraft.

Im vorliegenden Fall können der Längs-Pressstempel und/oder der Quer-Pressstempel und/oder die Bewegung der Messerachse kraftgesteuert sein, und vorzugsweise sind die beiden Pressstempel kraftgesteuert:
Um bei einem elastischen Laib eine vollständige Anlage des Außenumfanges des Laibes am Innenumfang der Formrohr-Öffnung zu erreichen, muss zumindest entweder das Längs-Verpressen oder das Quer-Verpressen kraftgesteuert durchgeführt werden.

Aufgrund der großen Unterschiede in der Länge der Laibe ist dies beim Längs-Pressstempel quasi unverzichtbar.

Den Quer-Pressstempel statt kraftgesteuert nur positionsgesteuert zu fahren, erfordert zumindest mehrere verschiedene potentielle Zielpositionen in Querrichtung aufgrund der unterschiedlichen Gestalt und Volumina der Laibe.

Da somit der Längs-Pressstempel ohnehin kein einstückiges, fixes Bauteil sein kann sondern zumindest in Richtung der Quer-Verpressung eine, zumindest stufenweise, besser stufenlos, variable Erstreckung aufweisen muss, ist es dann flexibler, auch den Quer-Pressstempel kraftgesteuert zu beaufschlagen.

Bei dem rotierenden Messer wird beim Schneiden von harten Anteilen im Laib wie etwa einem Knochen die Eindring-Geschwindigkeit des Messers an dem harten Teil zwangsläufig zurückgehen und mit zunehmender Kraftbeaufschlagung die Drehzahl des Messers vorzugsweise erhöht, wobei die Kraftbeaufschlagung vorzugsweise nach oben begrenzt werden sollte.

Bevorzugt ist deshalb die Bewegung der Messerachse positionsgesteuert, um sicherzustellen, dass die Schneidkante des Messers den gesamten Querschnitt dieses Formrohres überstreicht und somit den Laib durchtrennt.

Um das Messer schnell wechseln zu können, beispielsweise für das Schneiden eines knochigen Fleischstückes ein gezahntes Messer einsetzen zu können, weist die Schneidvorrichtung einen Schnellverschluss für das Messer auf, die es ermöglicht, das Messer ohne Werkzeug und in weniger als 30 Sekunden zu wechseln. Insbesondere weist der Schnellverschluss eine Drucktaste im Zentrum des Messers, also auf der Messerachse, auf, die betätigt werden muss, um das Messer - nachdem es mittels einer vorzugsweise radialen Bewegung vollständig aus dem Querschnitt des Formrohr-Revolvers herausbewegt wurde in eine Wechselposition - von der Messerachse axial abzuziehen und ein neues Messer aufzustecken und insbesondere zu verrasten.

Der jeweils vorhandene Quer-Pressstempel ist in der Formrohr-Öffnung als zusätzliches Teil vorhanden. Ein solcher Quer-Pressstempel wird dann durch eine Öffnung in der äußeren Wandung des Formrohr-Revolvers hindurch, von deren Umfangsfläche her mit Kraft beaufschlagt zur Verlagerung innerhalb der Formrohr-Öffnung.

Die in die Formrohr-Öffnung hineinweisende Pressfläche des Quer-Pressstempels ist dadurch Bestandteil der dadurch mehrteiligen Formrohr-Umfangswand, die den variablen freien Querschnitt der Formrohr-Öffnung umgibt.

Die Formrohr-Umfangswand weist vorzugsweise parallel zueinander verlaufende Öffnungs-Wände auf, zwischen die der Quer-Pressstempel einfahrbar ist, so dass dieser eine fixe Breite aufweisen kann.

Durch Anschläge am oder im Formrohr-Revolver kann verhindert werden, dass trotz Fixierung an einen Querpress-Antrieb sich der Quer-Pressstempel radial über seine radial äußerste, zurückgezogene, Endposition, insbesondere über den übrigen Außenumfang des Formrohr-Revolvers hinaus, bewegt.

Mittels federnder Elemente oder Magnete kann der unbeaufschlagte Quer-Pressstempel automatisch in die zurückgezogene Stellung vorgespannt sein.

Da für jede der Formrohr-Öffnungen aufgrund anderer Querschnitts-Form und Querschnitts-Größe ein anderer Längs-Pressstempel benötigt wird, umfasst die Schneidemaschine mehrere Längs-Pressstempel, die in einem Pressstempel-Magazin, vorzugsweise einem Pressstempel-Revolver, vorgehalten werden.

Mit Hilfe dieses Pressstempel-Magazins kann der benötigte Längs-Pressstempel axial hinter dem Belade-Ende des Formrohr-Revolvers in Schneidposition gebracht werden, wofür eben derjenige Längs-Pressstempel gewählt wird, der in die in der Schneidposition befindlichen oder die Schneidposition eben anfahrenden Formrohr-Öffnung passt.

Formrohr-Revolver und Pressstempel-Revolver drehen dabei um zueinander beabstandete, parallele Drehachsen, um das Beladen des Formrohr-Revolvers an diesem hinteren Belade-Ende nicht zu behindern, wobei die Schaltachse des Pressstempel-Revolvers vorzugsweise außerhalb des in axialer Richtung betrachteten Umfanges des Formrohr-Revolvers liegt und/oder an der Schneidposition angeordnet ist.

Die Drehbewegung des Pressstempel-Revolvers kann mit der des Formrohr-Revolvers gekoppelt, insbesondere mechanisch gekoppelt, sein, um automatisch immer den richtigen Längs-Pressstempel in Schneidposition zur Verfügung zu haben, der dann automatisch mit dem axial herannahenden Längspress-Antrieb, meist einer pneumatisch betriebenen Arbeitszylinder-Einheit, gekoppelt wird und von diesem in die in Schneidposition befindliche Formrohr-Öffnung eingefahren wird und sich hierfür automatisch aus dem Pressstempel-Revolver löst.

Analog wird beim vollständigen Zurückziehen des Längs-Pressstempels aus der Formrohr-Öffnung der Längs-Pressstempel automatisch wieder an den Pressstempel-Revolver in eine dortige Aufnahme-Öffnung übergeben und in dieser befestigt und andererseits vom Längspress-Antrieb gelöst.

Vorzugsweise ist an der erfindungsgemäßen Schneidemaschine ebenfalls ein - an sich bekanntes - Anschlagelement für das vordere Ende des aus dem Formrohr heraus geschobenen Laibes vorhanden, insbesondere ausgebildet als Anschlagplatte, und natürlich bzgl. der Messerebene auf der dem Schneidende des Formrohres gegenüber liegenden Seite in axialer Richtung.

Zur Festlegung der Scheibendicke wird dieses Anschlagelement, insbesondere die Anschlagplatte, wie üblich in ihrem axialen Abstand zu Ebene des Messers eingestellt.

Erfindungsgemäß ist die Anschlagplatte mit der Messerachse gekoppelt, insbesondere mechanisch gekoppelt und der Abstand zwischen der Messerachse und der Funktionskante der Anschlagplatte, welche der Messerachse zugewandt ist, insbesondere einstellbar. Die Anschlagplatte ist somit wie die Messerachse bewegbar, insbesondere synchron zusammen mit dieser bewegbar, rotiert jedoch nicht mit dem Messer um die Messerachse.

Vorzugsweise ist die Anschlagplatte gegenüber der Schneidvorrichtung oder dem Grundgestell der Schneidemaschine abgestützt, und insbesondere entlang von Führungen geführt, entlang denen sich das Anschlagelement bei Verändern der Position der Messerachse sowohl beim Aufschneiden von Scheiben als auch beim Verlagern der Messerachse in eine Wechselposition für das Messer - die durchaus eine Position des Bewegungsweges beim Aufschneiden von Scheiben sein kann - geführt ist.

Eine andere Möglichkeit besteht darin, dass das Anschlagelement von der Messerachse und/oder dem Messer entkoppelbar ist, was insbesondere automatisch geschehen kann, sobald das Messer oder die Messerachse eine vorgegebene Position auf ihrem Bewegungsweg erreicht, beispielsweise sobald das Messer keine Überschneidung mit dem Querschnitt der Formrohr-Öffnung in der Schneidposition mehr besitzt oder die Messerachse in Richtung Wechselposition bewegt wird.

Beim Schneiden, besser Sägen, von knochigem Material mittels eines gezahnten Messers entsteht Knochenmehl, welches möglichst aus dem Schneidspalt ausgetragen werden soll, weshalb zu diesem Zweck ausreichend Freiräume im Messer vorgesehen werden, beispielsweise in Umfangsrichtung zwischen den Zähnen oder in Form von Vertiefungen in den Haupt-Flächen des plattenförmigen Messers, in denen sich das Knochenmehl sammeln kann.

Da deren Aufnahmekapazität begrenzt ist, umfasst die Schneidmaschine vorzugsweise eine Reinigungsvorrichtung, um während des Schneidevorganges das Knochenmehl von dem rotierenden Messer zu entfernen, was beispielsweise mittels Druckluftdüsen, Wasserdüsen oder mechanisch mittels einer Bürste erfolgen kann.

Um auch Würfel - beispielsweise für Gulasch oder Schaschlik - schneiden zu können, ist nahe des Schneidendes im Formrohr-Revolver ein Würfel-Gatter aus sich kreuzenden, mit ihren Schneiden meist in einer Radialebene des Formrohr-Revolvers liegenden, geraden Gatter-Messern bekannt, welches in eine meist zum Außenumfang hin offene Ausnehmung des Formrohr-Revolvers eingeschoben werden kann. Bei Nichtbedarf wird die Ausnehmung durch einen Platzhalter nach außen hin dicht verschlossen, der bei vollständig eingeschobenem Platzhalter eine Durchgangsöffnung entsprechend und fluchtend mit dem Rest der Formrohr-Öffnung aufweist.

Allerdings erfordert ein solches Würfel-Gatter, dass stromaufwärts des Würfel-Gatters eine Zwischenplatte, deren Hauptebene quer, insbesondere lotrecht, zur axialen Richtung des Formrohr-Revolvers steht, in den Formrohr-Revolver, insbesondere an der Schneidposition, einbringbar ist und die Formrohr-Öffnung zumindest in der Schneidposition überdeckt, um beim Längs-Verpressen als Anschlagelement für den längs zu verpressenden Laib zu dienen.

Ein Längs-Verpressen gegen das Würfel-Gatter ist nicht möglich, da dieses entweder der Belastung nicht standhält oder der Laib beim Verpressen durch das Würfel-Gatter beim Verpressen hindurch gepresst würde, aber dann die entstehenden Streifen beim Anschlagen an der Anschlagplatte -in der an das Schneidende des Formrohr-Revolvers heran gefahrene Position - sich wieder verwerfen würden und sich keine optimale Füllung der Formrohr-Öffnung ergeben würde.

Erfindungsgemäß bevorzugt ist die Einsparung der Zwischenplatte und das Verpressen gegen ein Anschlagelement außerhalb unmittelbar vor dem Formrohr-Revolver.

Wenn dennoch ein Würfel-Gatter und eine Zwischenplatte verwendet werden, können die Ausnehmungen für Messer-Gatter und Zwischenplatte jeweils durch die besagten Platzhalter verschlossen werden, was jedoch Fugen in der Innenumfangsfläche der Formrohr-Öffnungen ergibt, was im Aufschneidebetrieb und beim Verpressen nachteilig sein kann.

Eine Möglichkeit besteht deshalb auch darin, den Formrohr-Revolver am Schneidende in axialer Richtung um eine Ergänzungs-Scheibe zu ergänzen - insbesondere wenn der Formrohr-Revolver ohnehin aus in axialer Richtung aufeinanderfolgenden Revolver-Scheiben zusammengesetzt ist - der die Ausnehmung für Würfel-Gatter und Zwischenplatte enthält.

Um hierfür nicht den gesamten, in der Regel von einer Zentralachse durchdrungenen, Formrohr-Revolver abbauen zu müssen, also insbesondere die Revolver-Scheiben von der Zentralachse trennen zu müssen, wird erfindungsgemäß vorgeschlagen, entweder die Zentralachse so auszubilden, dass eine ringförmig geschlossene Zusatzscheibe des Formrohr-Revolvers - nach Zurückbewegen des bisherigen Formrohr-Revolvers um die Dicke der Zusatz-Scheibe nach hinten - am Schneidende des Formrohr-Revolvers eingeschoben werden kann oder die Zusatz-Scheibe wird in axialer Richtung betrachtet mehrteilig ausgebildet werden kann, insbesondere in zwei Hälften, die von beiden Seiten her gegen die Zentralachse des Formrohr-Revolvers angelegt und gegeneinander sowie gegenüber dem Rest des - hierfür ebenfalls in axialer Richtung vorher zurück zu bewegenden - Formrohr-Revolvers fixiert werden kann.

### c) Ausführungsbeispiele

Ausführungsformen gemäß der Erfindung sind im Folgenden beispielhaft näher beschrieben. Es zeigen:
- **Fig. 1a - d:**: eine Schneidemaschine in der Seitenansicht, teilweise vertikal aufgeschnitten, in verschiedenen Arbeitsstellungen,
- **Figur 2:**: eine teilgeschnittene Ansicht der Schneidemaschine von oben, betrachtet an der Stelle II-II,
- **Figur 3:**: eine teilgeschnittene Ansicht der Schneidemaschine von oben, betrachtet an der Stelle III-III,
- **Figur 4:**: eine teilgeschnittene Ansicht der Schneidemaschine von unten, betrachtet an der Stelle IV-IV,
- **Fig. 5a - c:**: Ansichten von unten an der Stelle V-V in verschiedenen Arbeitsstellungen der Schneidvorrichtung

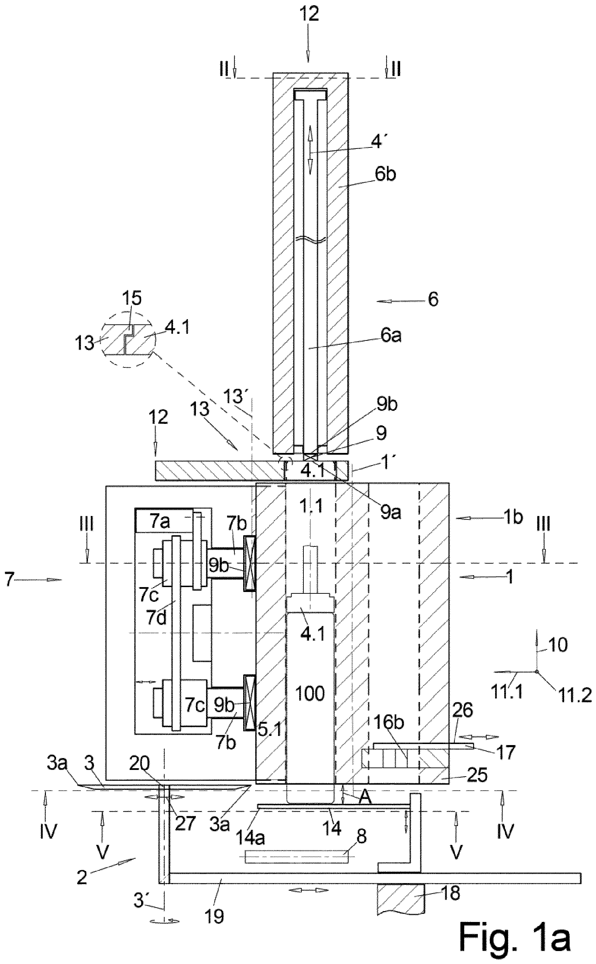

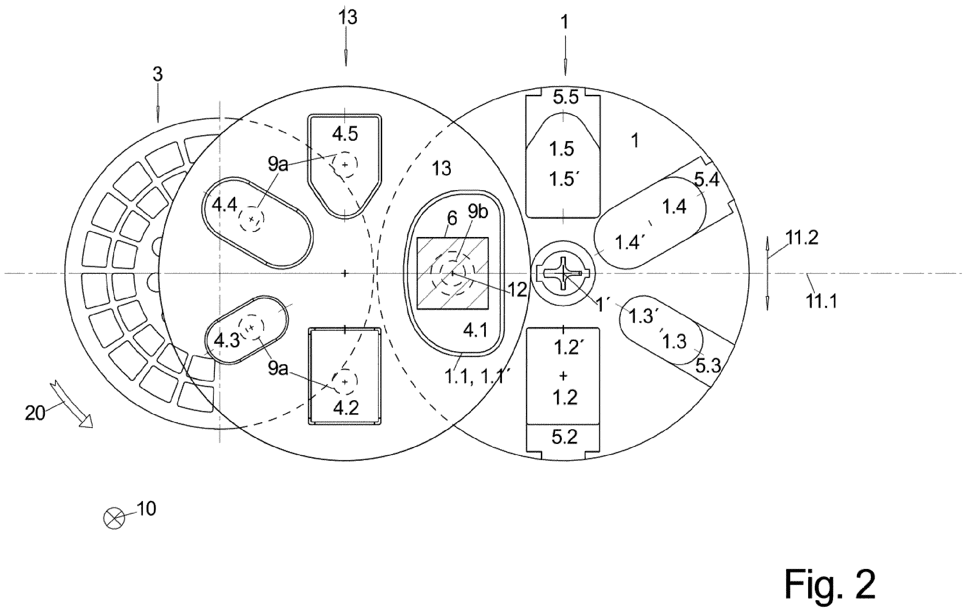

Der grundsätzliche Aufbau der Schneidemaschine lässt sich am besten in der Zusammenschau der **Figuren 1a** **und** **2** erläutern:
Ein - in diesem Fall aufrecht stehender und vom Querschnitt her runder, insgesamt zylindrischer, Formrohr-Revolver 1 ist um eine Drehachse 1', die in diesem Fall ebenfalls aufrecht steht und die Symmetrieachse des zylindrischen Formrohr-Revolvers 1 darstellt, drehbar im - nicht dargestellten - Grundgestell der Schneidemaschine gelagert.

Über den Umfang verteilt befinden sich in dem Formrohr-Revolver 1 mehrere axial verlaufende Formrohr-Öffnungen 1.1 - 1.5 mit unterschiedlichem Querschnitt, die sowohl im vorderen, unteren Schneidende 1a als auch im oberen, hinteren Beladeende 1b münden, also stirnseitig jeweils offen sind.

Die Formrohr-Öffnungen 1.1 - 1.5 dienen zum Aufnehmen eines in Scheiben aufzuschneidenden Laibes 100, der im Ausgangszustand eine längliche, aber unregelmäßige Form besitzt, sodass entsprechend des Querschnittes des Laibes 100 im Ausgangszustand dieser wahlweise in eine vom Querschnitt her am besten passende Formrohr-Öffnung 1.1 -1.5 von oben, vom Beladeende 1b her, eingeführt werden kann, die sich hierfür natürlich nicht an der Schneidposition 12 befinden darf, da dort der Längspress-Antrieb 6 das Einführen von oben verhindert, da die Schneidposition 12 in der Regel auch die Pressposition ist, in der der Laib 100 verpresst wird.

Eine Alternative wäre ein Längspress-Antriebs 6, der von seiner aktivierten Stellung über der in der Schneidposition befindlichen Formrohr-Öffnung zu einer deaktivierten Stellung abseits hiervon am Grundgestell verlagerbar wäre.

Unmittelbar vor, also unterhalb, der unteren Stirnfläche, dem Schneidende 1a des Formrohres 1, ist ein rotierendes, kreisscheiben-förmiges Messer 3 angeordnet, welches um eine Messerachse 3' rotierend angetrieben wird, die vorzugsweise parallel zur Drehachse 1' des Formrohr-Revolvers 1 liegt.

Das rotierende Messer 3 kann in einer 1. Querrichtung 11.1 zur Längsrichtung 10, die der Richtung der Schaltachse 1' des Formrohr-Revolvers 1 entspricht, radial zur an der Schneidposition 12 befindlichen Formrohr-Öffnung, hier 1.1, hin und her verfahren werden zum Abtrennen von Scheiben 101.

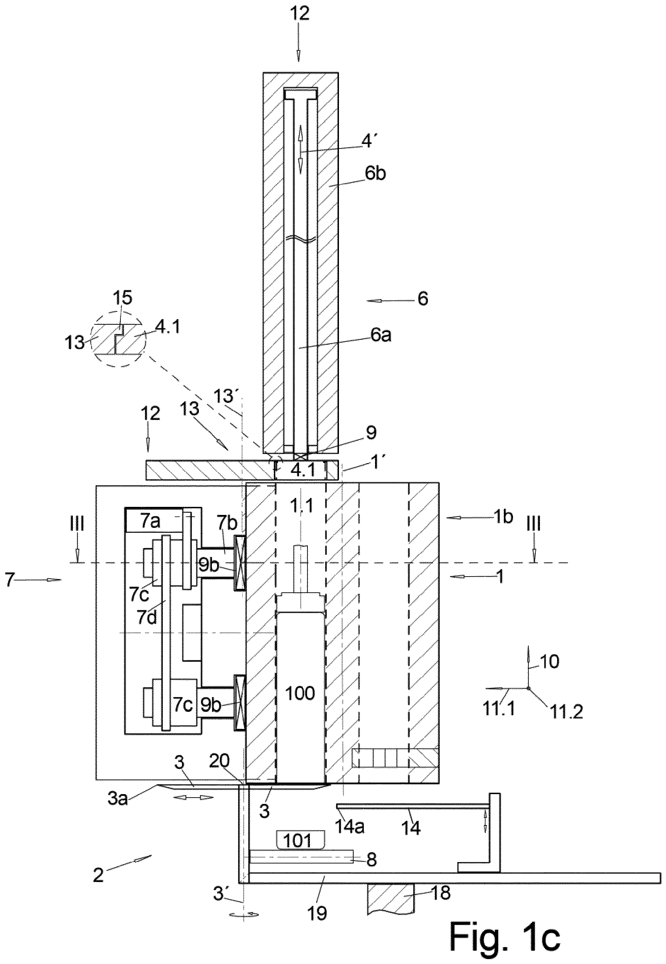

Auf diese Art und Weise wird letztendlich eine Scheibe 101 vollständig abgeschnitten, wie in **Figur 1c** dargestellt, woraufhin die abgetrennte Scheibe 101 auf den darunter angeordneten Abförderer 8 fällt und von diesem z.B. in Blickrichtung der **Figur 1c** abtransportiert werden kann.

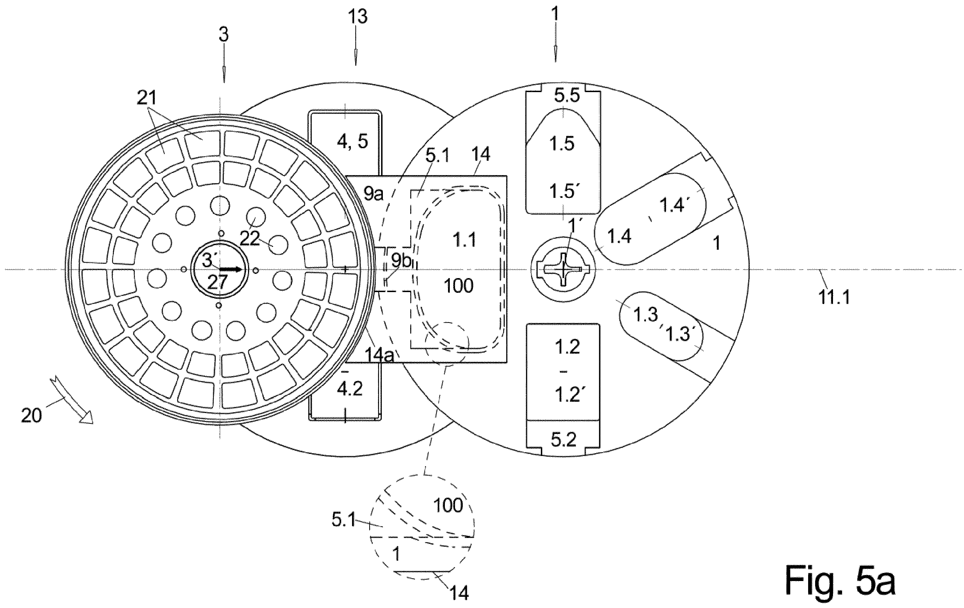

Die **Figuren 5a** **bis c** zeigen den Abtrennvorgang einer Scheibe 101 in der Ansicht gemäß **Figur 1a** von unten an der Stelle V - V, sodass hier auch die Anschlagplatte 14 zu erkennen ist:
In **Figur 5a** sowie **Figur 1a** befindet sich das Messer 3 noch vollständig außerhalb des Umfanges des Formrohr-Revolvers 1, zumindest jedoch außerhalb des Querschnittes der in der Schneidposition 12 befindlichen Formrohr-Öffnung, hier 1.1. Der in der Schneidposition 12 in der dortigen Formrohr-Öffnung 1.1 vorhandene Laib 100 ist bereits in der 1. Querrichtung 11.1 verpresst - was nachfolgend erläutert wird - also der Quer-Pressstempel 5.1 bereits etwas in die Formrohr Öffnung 1.1 eingefahren, wie die Vergrößerung in **Figur 5a** erkennen lässt.

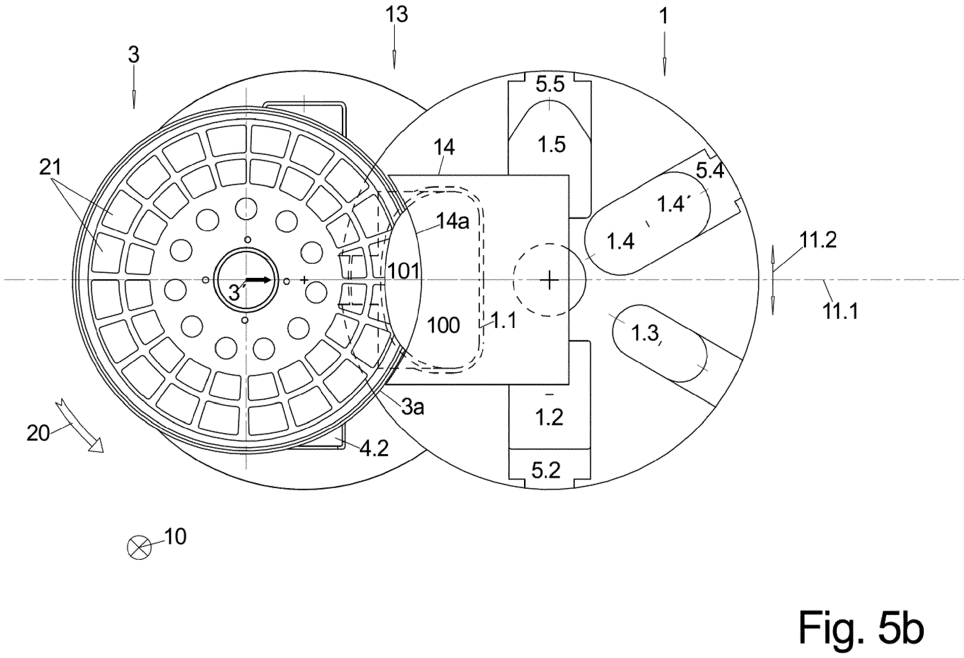

In **Figur 5b** sind Messer 3 und Anschlagplatte 14 gemeinsam bereits so weit nach rechts in der 1. Querrichtung 11.1 verfahren, dass das Messer 3 in den Laib 100 bereits eingedrungen ist und der bereits abgetrennte Teil der Scheibe 101 über die Funktionskante 14a der Anschlagplatte 14 hinaus zwischen Messer 3 und Anschlagplatte 14 vorsteht.

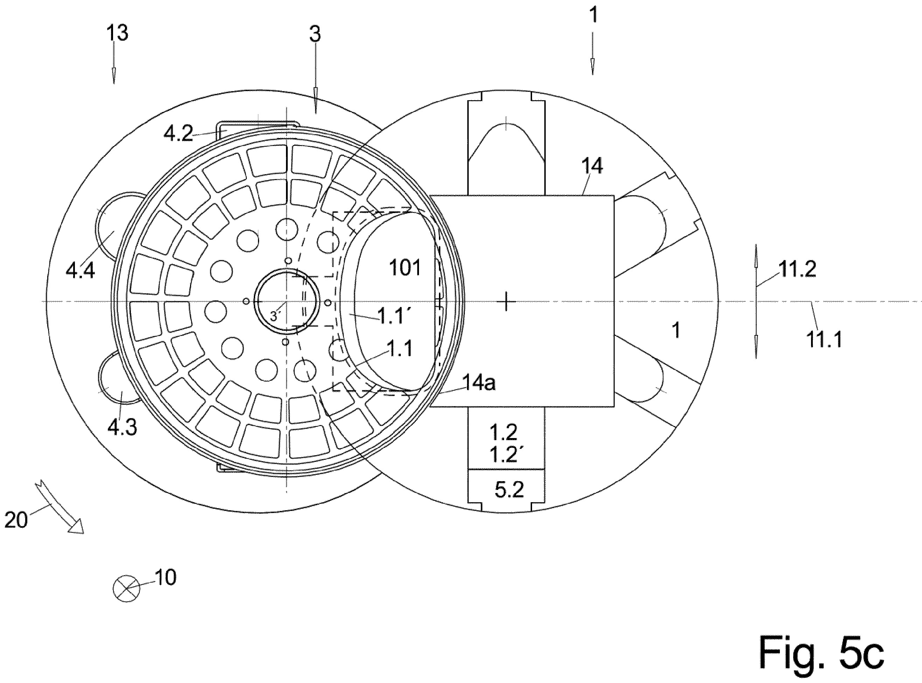

In **Figur 5c** und **Figur 1c** ist die Scheibe 101 vollständig abgetrennt, das Messer 3 deckt also den Querschnitt der an der Schneidposition befindlichen Formrohr-Öffnung 1.1 vollständig ab und die Anschlagplatte 14 befindet sich in dieser Blickrichtung vollständig außerhalb des Querschnittes dieser Formrohr-Öffnung 1.1.

**Figur 5c** zeigt also den Zustand unmittelbar vor dem Herabfallen der abgetrennten Scheibe 101 auf den Abförderer 8, während in **Figur 1c** die Scheibe 101 bereits auf dem Abförderer 8 liegt.

Statt einer linearen, oszillierenden Bewegung in Querrichtung 11.1 kann die Messerachse 3' auch eine bogenförmige, oszillierende, oder kreisförmig umlaufende Bewegung vollziehen, um jeweils eine Scheibe 101 abzutrennen, sofern die Schneidkante 3a des Messers 3 dabei den gesamten Querschnitt der in der Schneidposition 12 befindlichen Formrohr-Öffnung überstreicht.

Zum Herstellen eines gleichmäßigen Querschnittes des Laibes 100 wird dieser sowohl in Längsrichtung 10 als auch in einer Querrichtung, hier zum Beispiel der 1. Querrichtung 11.1, die in diesem Fall beispielsweise der Bewegungsrichtung der Messerachse 3' entspricht, gleichzeitig oder nacheinander in der Formrohr-Öffnung, welche sich in der Pressposition befindet, die in diesem Ausführungsbeispiel gleichzeitig die Schneidposition 12 ist, hier der Formular-Öffnung 1.1, , verpresst.

Für das Längsverpressen ist oberhalb des Formrohr-Revolvers 1 an der Schneidposition 12, ein Längspress-Antrieb 6 betrachtet in Richtung der Schaltachse 1' innerhalb des Umfanges des Formrohr-Revolvers 1 liegend am Grundgestell der Maschine angeordnet.

Der Längspress-Antrieb 6 besteht aus einem Arbeitszylinder, vorzugsweise einem Hydraulikzylinder, dessen in Längsrichtung 10 verfahrbare Kolbenstange 6a bei Beaufschlagung mit Arbeitsmedium aus dem unteren, offenen Ende des Zylinders 6b zunehmend ausfährt und mit ihrem vorderen Ende einen Längs-Pressstempel 4.1, der sich in der Press- und Schneidposition befindet und in den Querschnitt der darunter befindlichen Formrohr-Öffnung, hier 1.1, hineinpasst, in diese einschiebt bis zur Anlage am Laib 100 und diesen in Längsrichtung 10 nach unten presst gegen einen Anschlag.

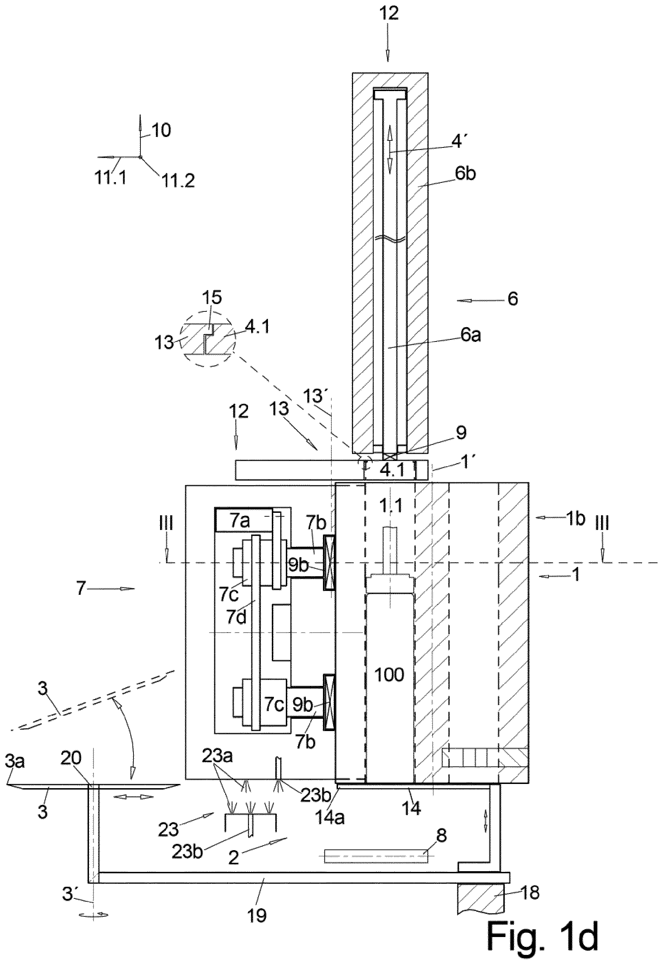

Als Anschlag dient in diesem Fall die gemäß **Figur 1d** an die untere Stirnfläche des in der Schneidposition 12 befindlichen Formrohr-Öffnung 1.1 herangefahrene und gehaltene, diese Formrohr-Öffnung 1.1 abdeckende, Anschlagplatte 14.

Da abhängig von dem Querschnitt der an der Schneidposition 12 befindlichen Formrohr-Öffnung 1.1 ein Längs-Pressstempel 4.1 mit einem dazu passenden Querschnitt benötigt wird, sind in einem scheibenförmigen Pressstempel-Revolver 13 kreisförmig verteilt Pressstempel 4.1 - 4.5 angeordnet, deren Querschnitte jeweils einem der Querschnitte 1.1' - 1.5' entsprechen und so im Pressstempel-Revolver 13 angeordnet sind, dass sie genau und vorzugsweise flüssigkeitsdicht in jeweils eine der Formrohr-Öffnungen 1.1 - 1.5 passen wenn sie sich in der Schneidposition über dieser Formrohr-Öffnung befinden.

Der Pressstempel-Revolver 13 ist um eine ebenfalls aufrechte, vorzugsweise parallel zur Schaltachse 1'des Formrohr-Revolvers 1 verlaufende, zu dieser jedoch in einer Querrichtung versetzte, vorzugsweise außerhalb des Umfanges des in der axialen Richtung betrachteten Formrohr-Revolvers 1 liegende, Schaltachse 13' drehbar, sodass bei einer bestimmten, an der Schneidposition 12 befindlichen Formrohr-Öffnung 1.1 der den gleichen Querschnitt aufweisende Längs-Pressstempel 4.1 durch entsprechendes Drehen des Pressstempel-Revolvers 13 durch Kopplung mit dem Formrohr-Revolver 1 vorzugsweise automatisch über dieser Formrohr-Öffnung 1.1 positioniert werden kann.

Beim Annähern des unteren, freien Endes der Kolbenstange 6a gegen die Oberseite des in der Schneidposition 12 befindlichen, noch im Pressstempel-Revolver 13 gehaltenen, Längs-Pressstempels 4.1 werden diese automatisch miteinander verbunden mittels einer Kupplung 9, indem am unteren freien Ende der Kolbenstange 6a einerseits und/oder der Oberseite jedes der Längs-Pressstempel 4.1 - 4.5 andererseits entsprechende, zusammenwirkende Kupplungs-Teile 9a, b vorhanden sind.

Zu diesem Zweck befinden sich die auf der Oberseite der Längs-Pressstempel 4.1 - 4.5 befindlichen Kupplungsteile 9a auf einer Kreisbahn um die Schaltachse 13' des Pressstempel-Revolvers, und wenn sich der entsprechende Längs-Pressstempel 4.1 fluchtend und über der in der Schneidposition 12 befindlichen Formrohr-Öffnung 1.1 befindet, genau im Bewegungsweg des am vorderen Ende der Kolbenstange 6a angeordneten anderen, komplementären Kupplung-Teiles 9b.

Beim Zurückziehen der Kolbenstange 6a mit dem daran befindlichen längs-Pressstempels 4.1, zum Beispiel nach Beenden des Aufschneidens eines Laibes 100, fährt der Längs-Pressstempel 4.1 beim Erreichen der entsprechenden Aussparung im Pressstempel-Revolver 13 gegen einen Längsanschlag 15 an oder in dieser Aussparung, sodass bei weiterem Zurückziehen der Kolbenstange 6a sich die Kupplung 9 löst und den entsprechenden Längs-Pressstempel 4.1 automatisch freigibt, der nun wieder in dem Pressstempel-Revolver 13 in der für den Längs-Pressstempel 4.1 vorgesehenen Aussparung gehalten wird, insbesondere magnetisch oder durch dortige geeignete Rastelemente.

Indem der Längspress-Antrieb 6 nur über der Schneidposition 12 vorhanden ist, vereinfacht sich der Aufbau der Schneidemaschine.

Zum einfachen Befüllen einer bestimmten Formrohr-Öffnung wird der zu verpressende und aufzuschneidende Laib 100 in diese Formrohr-Öffnung von oben eingeführt, während sich diese noch nicht an der Schneidposition 12 befindet, sondern in einer anderen Drehlage, die besser zugänglich ist, beispielsweise der Schneidposition 12 bezüglich der Schaltachse 1' gegenüberliegend.

Ebenso ist ein Querpress-Antrieb 7 nur an einer Stelle des Umfanges, nämlich ebenso an der Schneidposition 12, vorhanden, allerdings außerhalb des Umfanges des Formrohr-Revolvers 1 und innerhalb dessen Höhenbereiches.

Hierbei handelt es sich vorzugsweise nicht um einen Arbeitszylinder, sondern um eine elektrische Motor-Getriebe-Einheit mit zwei in der Höhe übereinander in dem Gehäuse des Querpress-Antriebes 7 geführten Stößeln, die in ihrem hinteren Bereich als Gewindespindeln 7b ausgebildet sind und an ihrem vorderen Ende jeweils ein Kupplungsteil 9b tragen, welches mit einem von zwei ebenfalls übereinander angeordneten, dazu komplementären, Kupplungsteilen 9a an dem jeweiligen Quer-Pressstempel 5.1 - 5.5 zusammen eine Kupplung 9 bilden können.

Zu diesem Zweck sind im Gehäuse des Querpress-Antriebes 7 an den entsprechenden Positionen übereinander zwei Spindel-Muttern 7c ortsfest, jedoch im Gehäuse drehbar, mit in der 1. Querrichtung 11.1 liegender Drehachse angeordnet, von denen mittels eines Treibriemens 7d die eine von einem Motor 7a gesteuert antreibbar ist, und die andere Gewindespindel 7b über einen weiteren Treibriemen 7d synchron mit der ersten Gewindespindel 7b in Drehung versetzt wird.

Somit können mittels des Motors 7a die beiden Gewindespindeln 7b synchron in oder entgegen der Querpress-Richtung 7', hier der ersten Querrichtung 11.1, verlagert werden und durch radiales nach innen Schieben des entsprechenden Quer-Pressstempels, hier 5.1, in den Querschnitt der entsprechenden Formrohr-Öffnung 1.1 hinein die Querverpressung des Laibes 100 bewirken.

Die Querschnitte der Formrohr-Öffnungen 1.1 - 1.5 besitzen eine solche Umfangskontur, dass zumindest in einem Teilbereich zwei einander gegenüber liegende Abschnitte der Umfangskontur einerseits parallel zueinander verlaufen und andererseits durch entsprechende Anordnung des Querschnittes parallel zur durch diesen Querschnitt mittig verlaufenden radialen Richtung ausgehend von der meist als Schaltachse 1' ausgebildeten Drehachse des Formrohr-Revolvers 1.

Schaltachse bedeutet, dass das entsprechende Bauteil, hier der Formrohr-Revolver 1, gedreht werden kann, aber zusätzlich in bestimmten Winkelstellungen arretiert werden kann, sodass also von einer zur nächsten der definierten Winkelstellungen weitergeschaltet werden kann.

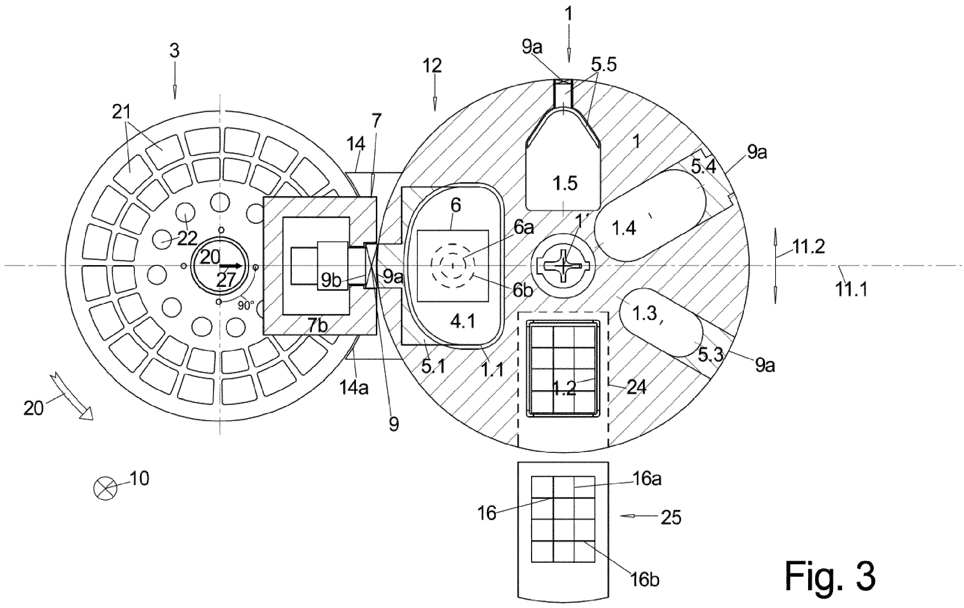

Der zwischen den nach radial außen weisenden Enden dieser parallelen Umfangs-Abschnitte verlaufende Umfangsbereich des Formrohr-Querschnittes ist als Pressfläche eines radial verschiebbar im Formrohr-Revolver 1 angeordneten Querpress-Stempels ausgebildet, wovon in Figur 3 zwei verschiedene Varianten dargestellt sind:
Die 1. Variante gemäß dem Quer-Pressstempel 5.1-5.4 besteht darin, dass der jeweilige Quer-Pressstempel Bestandteil des Umfanges der jeweiligen Formrohr-Öffnung ist. Der Quer-Pressstempel ist also in einer zur Umfangsfläche des Formular-Revolvers 1 hin offenen, in der axialen Richtung 10 verlaufenden, Formrohr-Rinne radial beweglich, Die Pressfläche ist die nach radial innen weisende freie Stirnfläche des jeweiligen Quer-Pressstempels z.B. 5.4 und besitzt in der Aufsicht gemäß der **Figur 3** betrachtet eine solche Breite, dass sie genau zwischen die parallel zueinander verlaufenden Umfangs-Abschnitte des entsprechenden Formrohr-Querschnittes 1.4' passt und zwischen diese eintauchen kann.

Das hintere, radial äußere, Ende aller Quer-Pressstempel 5.1 - 5.5 besitzt dabei - im Gegensatz zu den unterschiedlichen Formrohr-Querschnitten - jeweils die gleiche, quer zur Bewegungsrichtung des Quer-Pressstempels gemessene Breite, wobei diese vorzugsweise der in der Aufsicht betrachteten Breite der vorderen, radial inneren Enden der beiden übereinander angeordneten Gewindespindel 7b des Querpress-Antriebes 7 entspricht, wie am besten in den **Figuren 1a** **bis d** und **Figur 3** zu erkennen.

Diese Lösung besitzt den Vorteil, dass der Quer-Pressstempel zum Reinigen axial aus dem Formrohr-Revolver herausgezogen werden kann, jedoch den Nachteil, dass die einzelnen Formrohr-Öffnungen keine umfänglich vom Formrohr-Revolver umgebene Öffnungen sind und sich die Formrohr-Öffnung unter Druckbelastung quer zur radialen Richtung, also in Umfangsrichtung, aufweiten kann.

Deshalb ist bei der 2. Alternative gemäß der Formrohr-Öffnung 1.5 diese Formrohr-Öffnung 1...5 Formrohr-Revolver 1 vollständig in Umfangsrichtung umschlossen, und es erstrecken sich lediglich vom Umfang her in der Höhe zwei übereinander angeordnete Durchlässe, die vom Außenumfang in die Formrohr-Öffnung hinein führen und deren Querschnitt so gewählt ist, dass das vordere Ende jeweils einer der Gewindespindeln 7b in diese Durchlässe eingeführt werden kann.

Der Quer-Pressstempel befindet sich somit im Inneren der umfänglich geschlossenen Formrohr-Öffnung 1.5 und erstreckt sich in Längsrichtung 10 leistenförmig entlang dessen radial äußerem Umfangsbereich zwischen den beiden parallel zueinander verlaufenden Umfangs-Abschnitten. Von diesem Quer-Pressstempel 5.1 erstreckt sich durch die beiden Durchlässe hindurch jeweils ein daran befestigter Fortsatz, der an dem Außenumfang des Formrohr-Revolvers endet und dort jeweils ein Kupplungsteil 9a aufweist, wenn sich der Quer-Pressstempel in der nach maximal radial außen bewegten Ausgangsposition befindet.

Zum Reinigen kann der Quer-Pressstempel 5.5 entweder dadurch entnommen werden, dass der Formrohr-Revolver 1 aus in axialer Richtung 10 aufeinanderfolgenden Scheiben gebildet ist, und sich die Durchlässe jeweils im Kontaktbereich zwischen zwei aufeinanderfolgenden Scheiben befinden, oder bei einem einstückigen Formrohr-Revolver 1 dadurch, dass die Fortsätze vom Umfang des Formrohr-Revolvers 1 her von dem Quer-Pressstempel gelöst, zum Beispiel ab geschraubt werden können und der leistenförmige Quer-Pressstempel 5.5 dann axial aus der Formrohr-Öffnung 1.5herausgenommen werden kann

Beim Ausfahren der Gewindespindeln 7b aus dem Gehäuse des Querpress-Antriebes 7 in Richtung Schaltachse 1' des Formrohr -Revolvers 1 kuppelt deren jeweiliges vorderes freies Ende- mit dem dort vorhandenen Kupplungsteil 9b - analog wie beim Längs-Pressstempel - beim Erreichen des jeweiligen Quer-Pressstempels automatisch an dessen komplementären Kupplungsteil 9a an und schiebt den Quer-Pressstempel 5.5 weiter vorwärts in den Formrohr-Hohlraum 1.5 hinein.

Beim Zurückziehen schlägt der entsprechende Quer-Pressstempel in seiner radial äußersten Position an einem entsprechenden Anschlag des Formrohr-Revolvers 1 an und durch weiteres Zurückziehen lösen sich die Kupplungsteile 9a, 9b voneinander. Vorzugsweise stehen die äußeren Enden der Quer-Pressstempel in ihrer radial äußersten Position nicht über den Umfang des restlichen Formrohr-Zylinders 1 vor.

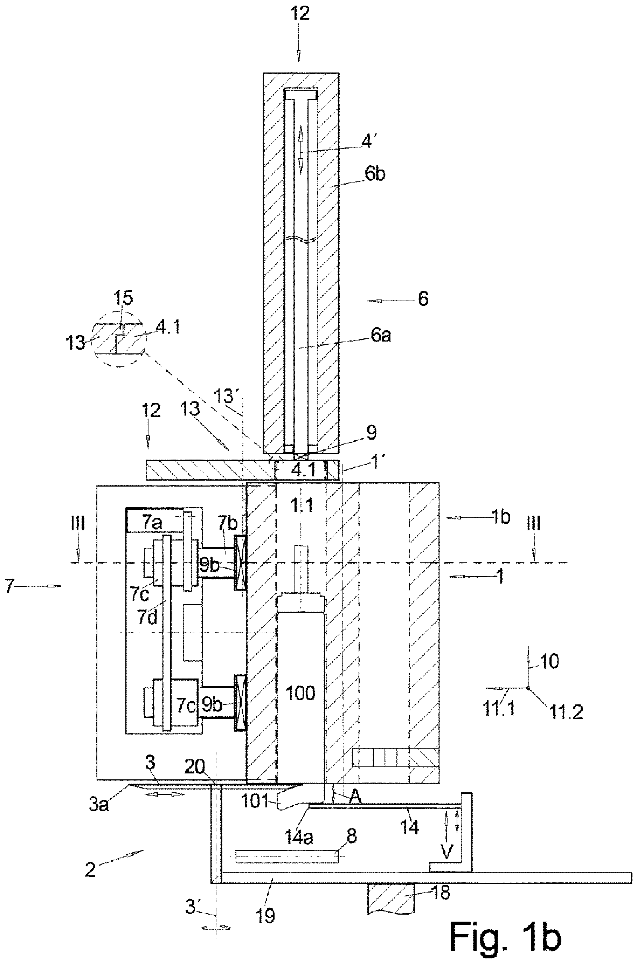

Nach dem Verpressen des Laibes 100, also wenn dieser einen über seine gesamte Länge in axialer Richtung 10 gleichbleibenden Querschnitt entsprechend dem Formrohr-Querschnitt, in dem er sich befindet, aufweist, wird - unter Aufrechterhaltung der Längs- und Querverpressung - das Aufschneiden begonnen, indem
- die Anschlagplatte 14 auf einen Abstand A in Längsrichtung 10 zur vorderen, unteren Stirnfläche des Formrohr-Revolvers 1 gebracht wird, der mit der Dicke der herzustellenden Scheibe korreliert,
- der Laib 100 durch Vorwärtsschieben der Kolbenstange 6a des Längspress-Antriebes 6 aus dem Schneidende 1a des Formrohr-Revolvers 1 vorwärtsgeschoben wird insbesondere bis zum Anschlag an der Anschlagplatte 14 und
- das rotierende Messer 3 in Verlagerungsrichtung 26 seiner Messerachse 3', vorzugsweise der 1. Querrichtung 11.1, in Richtung Schneidposition 12 bewegt wird und dadurch vom Laib 100 unmittelbar vor der vorderen, unteren Stirnfläche des Formrohr-Revolvers 1 eine Scheibe 101 abgetrennt wird gemäß den **Figuren 1b**, **c** **und** **5b**, **c**.

Im Folgenden wird anstelle von Verlagerungsrichtung 26 der Messerachse 3' immer von der 1. Querrichtung 11.1 gesprochen, obwohl die Verlagerungsrichtung 26 auch eine andere quer zur Längsrichtung 10 des Formrohr-Revolvers 1 verlaufende Richtung sein kann, ohne die Erfindung hierauf zu beschränken.

Das Messer 3 ist drehbar um seine Messerachse 3.1 an einem Schlitten 19 gelagert, der in dieser Verlagerungsrichtung gegenüber dem Schneid-Grundgestell 18 verfahrbar ist. Auch die Anschlagplatte 14 wird von dem Schlitten 19 getragen, ist diesem gegenüber jedoch zumindest in axialer Richtung 10 verstellbar, gegebenenfalls auch in radialer Richtung.

Beim Schneidvorgang bewegen sich Messer 3 und Anschlagplatte 14 vorzugsweise synchron in der 1. Querrichtung 11.1 sodass die entstehende Scheibe 101 zunehmend durch den Spalt zwischen der Schneide 3a des Messers 3 und der dem Messer zugewandten Funktionskante 14a der Anschlagplatte 14 hindurchgeschoben wird.

Die Funktionskante 14a ist - in axialer Richtung 10, also beispielsweise von unten betrachtet wie in **Figur 5a** - vorzugsweise konkav gekrümmt und verläuft in dieser Blickrichtung fluchtend oder leicht radial nach außen versetzt, insbesondere in einem über die Länge der Funktionskante gleichbleibenden Abstand, gegenüber dem kreisförmigen Umfang der Schneide 3a.

Vorzugsweise kann die Anschlagplatte 14 und damit deren Funktionskante 14a zusätzlich gemäß **Figur 1a** gegenüber dem Schlitten 19 und damit der Schneide 3a des Messers 3 in der 1. Querrichtung 11.1 verstellt werden, vorzugsweise auch während des Schneidvorganges.

Diese sowie alle anderen Bewegungen bewegter Teile der Schneidemaschine werden von einer nicht dargestellten Steuerung angesteuert.

**Figur 1d** zeigt einen Zustand der Schneidmaschine, in dem zwei Vorgänge gleichzeitig dargestellt sind, die in der Praxis aber nicht gleichzeitig auftreten müssen:
Zum einen ist die Anschlagplatte 14 soweit hochgefahren, dass sie unmittelbar an der unteren Stirnfläche des Formrohr-Revolvers 1, dem Schneidende 1a, anliegt, wie es als Anschlag für das Längs-Verpressen des Laibes 100 an der Schneidposition 12 notwendig ist.

Des Weiteren ist das Messer 3 so weit von der Schaltachse 1' des Formrohr-Revolvers 1 weg verlagert, dass es sich nicht nur - wie in **Figur 1a** betrachtet - in Längsrichtung 10 vollständig außerhalb des Querschnittes des Formrohr-Revolvers 1 befindet, sondern auch vollständig außerhalb des Querpress-Antriebes 7, sodass das Messer 3, welches auf seiner Unterseite vom Schlitten 19 abgestützt wird, von der Oberseite her über seine gesamte Fläche frei zugänglich ist.

In dieser Wechselposition kann der Schnellverschluss 20 zum Lösen des Messers 3 von der Messerachse 3' - hier ausgebildet als Zentralverschluss 20 direkt auf der Messerachse 3' - gelöst und das Messer 3, insbesondere nach oben abgenommen und gegen ein anderes Messer ausgetauscht werden.

Da beim Durchsägen von Knochen mit einer gezahnten Schneide 3a Knochenmehl entsteht, welches nach Möglichkeit aus dem Laib 100 ausgetragen werden soll, sind zumindest auf der Seite des Messers 3, auf der die Schneide 3a angeschliffen ist, vorzugsweise in beiden Hauptflächen des Messers 3, Vertiefungen 21 eingearbeitet, in denen sich während des Schneidvorganges das Knochenmehl sammeln soll.

Durch eine entweder am Schlitten 19 und/oder am Grundgestell befestigte, Reinigungsvorrichtung 23, wie beispielhaft in **Figur 1d** dargestellt, wird in den Vertiefungen 21 abgelagertes Knochenmehl bereits während des Schneidvorganges wieder entfernt.

Zu diesem Zweck sind Bürsten 23a und/oder Düsen 23b zum Ausbringen von Druckluft oder Wasser vorhanden so positioniert sind, dass sie auf die entsprechende Hauptfläche des Messers 3 während der Schneidvorgänge einwirken, vorzugsweise im Bereich deren Vertiefungen 21.

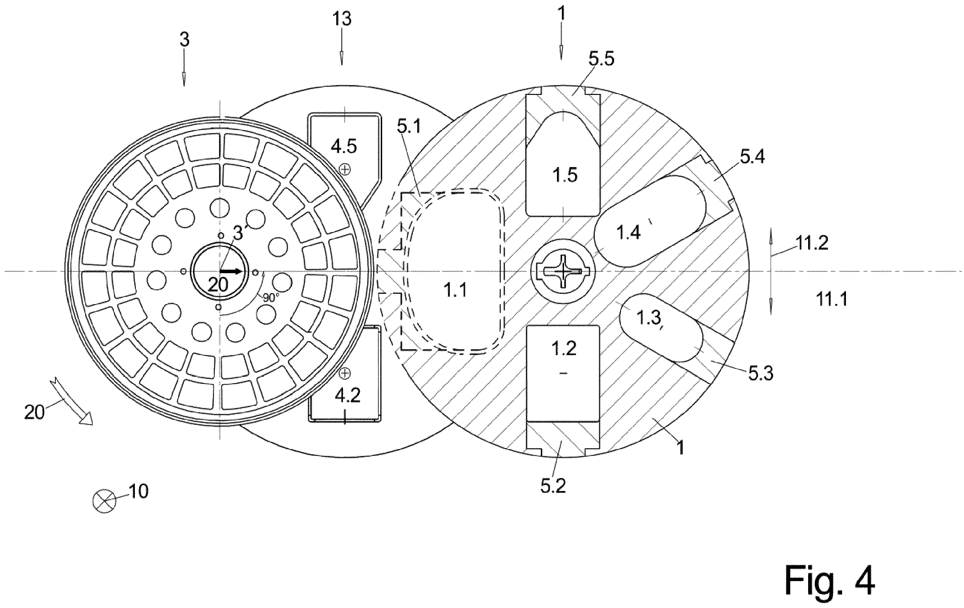

Die in den **Figuren 2 bis 5c** dargestellten, radial innerhalb der Vertiefungen 21 um die Mitte des Messers 3 herum, vorzugsweise auf einer Kreisbahn, angeordneten Durchbrüche 22 durch das scheibenförmige Messer 3 dienen dagegen primär der Gewichtsreduzierung des Messers 3 sowie auch als Greif-Öffnungen für das Ergreifen des Messers 3 beim Messerwechsel, sei es zum manuellen Ergreifen oder zum Ergreifen mittels einer Hilfsvorrichtung.

Um die Schneidemaschine möglichst universal einsetzen zu können, soll auch das Aufschneiden eines Laibes 100 in Würfel möglich sein, indem also nicht nur Scheiben 101 abgetrennt werden, sondern der Laib 100 bereits vor dem Abtrennen der Scheiben 101 innerhalb des Formrohr-Revolvers 1 in einzelne parallel liegende Längsstränge mit insbesondere rechteckigem Querschnitt zerschnitten wird. Dies erfolgt durch ein quer in die Formrohr-Öffnung z.B. 1.2 eingeschobenes Würfelgatter 16.

Zu diesem Zweck kann im Bereich einer der Formrohr-Öffnungen z.B. 1.2, welche vorzugsweise einen rechteckigen Querschnitt besitzt, eine zum Außenumfang des Formrohr-Revolvers 1 hin offene Ausnehmung 24 vorhanden sein, die in Längsrichtung 10 betrachtet größer ist als der Querschnitt dieser Formrohr-Öffnungen z.B. 1.2, und diesen in axialer Richtung 10 betrachtet vollständig einschließt. In diese Ausnehmung 24 kann von radial außen her ein Einsatzteil 25, welches das Würfelgatter 16 enthält, wie eine Schublade eingeschoben werden und im vollständig eingeschobenen Zustand vorzugsweise auch gesichert werden.

Im vollständig eingeschobenen Zustand fluchtet die Durchgangsöffnung in dem Einsatzteil 25 mit dem Querschnitt dieser Formrohr-Öffnung`. Streifenförmige, gerade Gatter-Messer 16a, b, die sich mit ihrer Breite in Längsrichtung 10 und mit ihrer Länge über die Durchgangsöffnung quer in jeweils einer derer beiden Querrichtungen hinweg erstrecken und sich dabei kreuzen, bilden das Würfelgatter 16.

Oberhalb des Würfelgatters 16 und vorzugsweise in das Einsatzteil 25 ist eine Zwischenplatte 26 einschiebbar, sodass sie den gesamten Querschnitt 1.2' dieser Formrohr-Öffnung 1.2 verschließt als Anschlag beim Längs-Verpressen des Laibes 100. Vor dem anschließenden Aufschneiden des Laibes 100 wird diese Zwischenplatte 26 wieder entfernt.

Ein Quer-Verpressen des Laibes 100 findet in aller Regel vor dem Würfelschneiden nicht statt.

Soll die entsprechende Formrohr-Öffnung 1.2 ohne Würfelgatter 16 benutzt werden, wird anstelle des Einsatzteiles 25 ein nicht dargestellter Platzhalter eingesetzt, welcher die Ausnehmung 24 ausfüllt und eine Durchlass-Öffnung aufweist, die mit der Formrohr-Öffnung 1.2 fluchtet.

### BEZUGSZEICHENLISTE

- 1: Formrohr-Revolver
- 1': Drehachse, Schaltachse
- 1a: Schneid-Ende
- 1b: Belade-Ende
- 1.1, 1.2: Formrohr-Öffnung
- 1.1', 1.2': Querschnitt
- 2: Schneidvorrichtung
- 3: Messer
- 3': Messerachse
- 3a: Schneide, Schneidkante
- 4.1-4.5: Längs-Pressstempel
- 4': Längs-Pressrichtung
- 5.1-5.5: Quer-Pressstempel
- 5': Quer-Pressrichtung
- 6: Längspress-Antrieb
- 6a: Kolbenstange
- 6b: Zylinder
- 7: Querpress-Antrieb
- 7': Querpress-Richtung
- 7a: Motor
- 7b: Gewindespindel
- 7c: Spindelmutter
- 7d: Treibriemen
- 8: Abförderer
- 9: Kupplung
- 9a, b: Kupplungs-Teil
- 10: axiale Richtung, Längsrichtung
- 11: Querrichtung, radiale Richtung
- 11.1: erste Querrichtung,
- 11.2: zweite Querrichtung,
- 12: Schneidposition
- 13: Pressstempel-Revolver
- 13': Drehachse, Schaltachse
- 14: Anschlagelement, Anschlagplatte
- 14a: Funktionskante
- 15: Längsanschlag
- 16: Würfel-Gatter
- 16a, b: Gatter-Messer
- 17: Zwischenplatte
- 18: Schneid-Grundgestell
- 19: Schlitten
- 20: Zentralverschluss
- 21: Vertiefung
- 22: Durchbruch
- 23: Reinigungs-Vorrichtung
- 23a: Bürste
- 23b: Düse
- 24: Ausnehmung
- 25: Einsatzteil
- 26: Zwischenplatte
- 27: Verlagerungsrichtung

- 100: Laib
- 101: Scheibe

- A: Abstand

## Patentansprüche

1. **Schneidemaschine** zum Aufschneiden eines Laibes (100) aus elastischem Material in Scheiben (101) mit
- einem Grundgestell,
- einem im Grundgestell um eine Drehachse (1') drehbar gelagerten Formrohr-Revolver (1), in dem mehrere, in axialer Richtung (10) des Formrohr-Revolvers (1) verlaufende, stirnseitig beidseits offene, Formrohr-Öffnungen (1.1 - 1.5) zur Aufnahme je eines Laibes (100) angeordnet sind,
- einem Längspress-Antrieb (6), der am Grundgestell an einer Stelle der Umfangskontur des Formrohr-Revolvers (1) in axialer Richtung (10) eine Kraft aufbringen kann zum axialen Einfahren eines Längs-Pressstempels (4.1 - 4.5) in das an dieser Stelle befindliche Formrohr (1.1) vom Beladeende (1b) und Vorwärtsschieben sowie Längsverpressen des darin befindlichen Laibes (100) in Richtung Schneidende (1a) des Formrohr-Revolvers (1),
- einer Schneidvorrichtung (2) mit einem Messer (3), welches vor dem Schneidende (2a) des Formrohr-Revolvers (1) angeordnet ist und in radialer Richtung (11) relativ zum Formrohr-Revolver (1) verlagerbar ist,
- an oder in den Formrohr-Öffnungen (1.1 - 1.5) je ein Quer-Pressstempel (5.1 -5.5) angeordnet ist, der in radialer Richtung (11.1) des Querschnittes der Formrohr-Öffnung (1.1 - 1.5) verlagerbar ist,
- ein Querpress-Antrieb (7) vorhanden ist zum Kraftbeaufschlagen eines Quer-Pressstempels (5.1 - 5.5) in dessen Verlagerungs-Richtung,
**dadurch gekennzeichnet, dass**
- der Längspress-Antrieb (6) und/oder der Querpress-Antrieb (7) und/oder das Messer (3) in seiner Bewegung kraftgesteuert ist.

2. Schneidemaschine nach Anspruch 1,
**dadurch gekennzeichnet, dass**
- der Längspress-Antrieb (6) mit einem der Längspress-Stempel (4.1 - 4.5) koppelbar und entkoppelbar ist
und/oder
- der Querpress-Antrieb (7) mit einem der Querpress-Stempel (5.1 - 5.5) koppelbar und entkoppelbar ist
und/oder
- vorzugsweise nurder Längspress-Antrieb (6) und/oder der Querpress-Antrieb (7) kraftgesteuert sind.

3. Schneidemaschine nach einem der vorhergehenden Ansprüche,
**dadurch gekennzeichnet, dass**
- der Querpress-Antrieb (7) an, insbesondere nur an, der Schneidposition (12) vorhanden ist
und/oder
- der jeweilige Quer-Pressstempel (5.1 - 5.5)
- entweder radial innerhalb der Formrohr-Öffnung (z.B. 1.1) angeordnet ist,
- oder seine radial ins Innere des Querschnittes der Formrohr-Öffnung (1.1 - 1.5)weisende Pressfläche Bestandteil der dadurch mehrteiligen Formrohr-Umfangswand der Formrohr-Öffnung (1.1, 1.2, 1.3) ist.

4. Schneidemaschine nach einem der vorhergehenden Ansprüche,
**dadurch gekennzeichnet, dass**
- entweder das Messer (3) ein linear bewegliches Messer (3) ist, insbesondere ein endloses bandförmiges oder ein endliches plattenförmiges Messer (3),
- oder das Messer (3) ein rotierendes Messer (3) ist, das insbesondere um eine parallel zur axialen Richtung (10) verlaufende Messerachse (3') rotiert und insbesondere einen kreisförmigen Umfang aufweist, der als Schneide (3a) ausgebildet ist.

5. Schneidemaschine nach einem der vorhergehenden Ansprüche,
**dadurch gekennzeichnet, dass**
die Messerachse (3') in einer Schwinge oder in einem in radialer Richtung (11) verfahrbaren Schlitten (19) gelagert ist.

6. Schneidemaschine nach einem der vorhergehenden Ansprüche,
**dadurch gekennzeichnet, dass**
- die Schneidvorrichtung (2) einen Schnellverschluss (20), insbesondere einen Zentralverschluss (20), zum Fixieren des Messers (3) an der Schneidvorrichtung (2), insbesondere auf der Messerachse (3') umfasst,
- die insbesondere einen Wechsel des Messers (3) in weniger als 30 s und ohne Werkzeug ermöglicht.

7. Schneidemaschine nach einem der vorhergehenden Ansprüche,
**dadurch gekennzeichnet, dass**
- der jeweilige Längs-Pressstempel (4.1 - 4.5) lösbar am Längspress-Antrieb (6), insbesondere dessen Kolbenstange (6a) befestigt ist und
- je ein zu einer der Formrohr-Öffnungen passender Längs-Pressstempel 4.1 - 4.5) lösbar an oder in einem drehbaren Pressstempel-Revolver (13) angeordnet ist,
- wobei der Pressstempel-Revolver (13) um eine zur Drehachse (1') des Formrohr-Revolvers (1) parallele, hierzu beabstandete Drehachse (13') gesteuert verdrehbar ist.

8. Schneidemaschine nach einem der vorhergehenden Ansprüche,
**dadurch gekennzeichnet, dass**
ein Anschlagelement (14), insbesondere eine Anschlagplatte (14), für den Laib (100) vorhanden ist, das
- mit seiner Hauptebene quer, insbesondere lotrecht, zur axialen Richtung (10) angeordnet ist,
- in ihrem axialen Abstand (A) zum Schneidende (2a) des Formrohr-Revolvers (1) einstellbar ist,
- mit der Messerachse (3') gekoppelt, insbesondere lösbar gekoppelt, ist.

9. Schneidemaschine nach einem der vorhergehenden Ansprüche,
**dadurch gekennzeichnet, dass**
das Anschlagelement (14)
- in seinem radialen Abstand zur Messerachse (3') einstellbar ist und/oder
- von der Messerachse (3') und/oder dem Messer (3) entkoppelbar ist, insbesondere automatisch bei einer bestimmten Stellung der Messerachse (3').

10. Schneidemaschine nach einem der vorhergehenden Ansprüche,
**dadurch gekennzeichnet, dass**
eine Reinigungsvorrichtung (23) vorhanden ist, die in einem außerhalb des Formrohr-Querschnittes (z.B. 1.2') liegenden Umfangsbereich des Messers (3) am Messer (3) abgelagertes Knochenmehl, insbesondere in Vertiefungen (21) und/oder Durchbrüchen (22) des Messers (3), entfernt, und die insbesondere eine Druckluft-Düse (23b) und/oder eine Bürste (23a) umfasst.

11. Schneidemaschine nach einem der vorhergehenden Ansprüche,
**dadurch gekennzeichnet, dass**
die Schneidemaschine ein Würfel-Gatter (16) mit sich kreuzenden Gatter-Messern (16a, b) umfasst, welches, insbesondere radial, als Einsatzteil (25) in eine zum Umfang des Formrohr-Revolvers (1) hin offene Ausnehmung (24) des Formrohr-Revolvers (1) einbringbar ist, insbesondere radial einschiebbar ist.

12. Schneidemaschine nach einem der vorhergehenden Ansprüche,
**dadurch gekennzeichnet, dass**
die Schneidemaschine eine Zwischenplatte (17) umfasst, welche, insbesondere radial, in eine Ausnehmung (24) des Formrohr-Revolvers (1) und/oder des Würfel-Gatters (16) einbringbar ist, insbesondere radial einschiebbar ist.

13. Schneidemaschine nach einem der vorhergehenden Ansprüche,
**dadurch gekennzeichnet, dass**
- der Formrohr-Revolver (1) aus mehreren, in axialer Richtung (10) aufeinanderfolgenden Revolver-Scheiben besteht,
- insbesondere eine Revolver-Scheibe als Zusatz-Scheibe die Ausnehmung (24) für das Würfel-Gatter (16) und/oder die Zwischenplatte (17), vorzugsweise für beide, umfasst,
- die Zusatz-Scheibe so gestaltet ist, dass sie nach axialem Verlagern des Formrohr-Revolvers (1) am Schneidende (1a) hinzugefügt und mit dem Formrohr-Revolver (1) verbunden werden kann, ohne den Formrohr-Revolver (1) abzubauen.

## Claims

1. **Cutting machine** for cutting a loaf (100) of resilient material into slices (101), comprising
- a base frame,
- a forming tube turret (1) which is mounted in the base frame so as to be rotatable about an axis of rotation (1') and in which a plurality of forming tube openings (1.1 - 1.5), which extend in the axial direction (10) of the forming tube turret (1) and are open at both end faces are arranged, for receiving one loaf (100) in each case,
- a longitudinal pressing drive (6) which can apply a force, on the base frame at a location of the peripheral contour of the forming tube turret (1), in the axial direction (10), for axially retracting a longitudinal plunger (4.1 - 4.5) into the forming tube (1.1) located at this location, from the loading end (1b), and pushing forward and longitudinally pressing the loaf (100) located therein, in the direction of the cutting end (1a) of the forming tube turret (1),
- a cutting device (2) comprising a blade (3) which is arranged in front of the cutting end (2a) of the forming tube turret (1) and is displaceable in the radial direction (11), relative to the forming tube turret (1),
- in each case a transverse plunger (5.1 - 5.5) is arranged on or in the forming tube openings (1.1 - 1.5), which plunger is displaceable in the radial direction (11.1) of the cross-section of the forming tube opening (1.1 - 1.5),
- a transverse pressing drive (7) is provided for applying force to a transverse plunger (5.1 - 5.5) in the displacement direction thereof,
**characterised in that**
- the movement of the longitudinal pressing drive (6) and/or the transverse pressing drive (7) and/or the blade (3) is force-actuated.

2. Cutting machine according to claim 1,
**characterised in that**
- the longitudinal pressing drive (6) can be coupled to and decoupled from one of the longitudinal plungers (4.1 - 4.5)
and/or
- the transverse pressing drive (7) can be coupled to and decoupled from one of the transverse plungers (5.1 - 5.5)
and/or
- preferably only the longitudinal pressing drive (6) and/or the transverse pressing drive (7) are force-actuated.

3. Cutting machine according to either of the preceding claims,
**characterised in that**
- the transverse pressing drive (7) is provided at, in particular only at, the cutting position (12)
and/or
- the respective transverse plunger (5.1 - 5.5)
- is either arranged radially inside the forming tube opening (e.g. 1.1),
- or its pressing surface facing radially into the interior of the cross-section of the forming tube opening (1.1 - 1.5) is a component of the thus multi-part forming tube peripheral wall of the forming tube opening (1.1, 1.2, 1.3).

4. Cutting machine according to any of the preceding claims,
**characterised in that**
- either the blade (3) is a linearly movable blade (3), in particular an endless belt-shaped or a finite plate-shaped blade (3),
- or the blade (3) is a rotating blade (3), which in particular rotates about a blade axis (3') extending in parallel with the axial direction (10), and in particular has a circular periphery which is formed as a cutting edge (3a).

5. Cutting machine according to any of the preceding claims,
**characterised in that**
the blade pivot pin (3') is mounted in a motion link or in a carriage (19) that is displaceable in the radial direction (11).

6. Cutting machine according to any of the preceding claims,
**characterised in that**
- the cutting device (2) comprises a quick-release locking means (20), in particular a central locking means (20), for fixing the blade (3) to the cutting device (2), in particular on the blade axis (3'),
- which in particular allows for one change of the blade (3) in less than 30 seconds and without tools.

7. Cutting machine according to any of the preceding claims,
**characterised in that**
- the respective longitudinal plunger (4.1 - 4.5) is detachably fastened to the longitudinal pressing drive (6), in particular the piston rod (6a) thereof, and
- in each case one longitudinal plunger (4.1 - 4.5) that is matched to one of the forming tube openings is detachably arranged on or in a rotatable plunger turret (13),
- the plunger turret (13) being rotatable, in a controlled manner, about an axis of rotation (13') that is in parallel with and spaced apart from the axis of rotation (1') of the forming tube turret (1).

8. Cutting machine according to any of the preceding claims,
**characterised in that**
a stop element (14), in particular a stop plate (14), for the loaf (100) is provided, which
- is arranged having its main plane transverse, in particular perpendicular, to the axial direction (10),
- is adjustable in terms of its axial distance (A) from the cutting end (2a) of the forming tube turret (1),
- is coupled, in particular detachably coupled, to the blade pivot pin (3'),

9. Cutting machine according to any of the preceding claims,
**characterised in that**
the stop element (14)
- is adjustable in terms of its radial distance from the blade pivot pin (3')
and/or
- can be decoupled from the blade pivot pin (3') and/or the blade (3), in particular automatically in a certain position of the blade pivot pin (3').

10. Cutting machine according to any of the preceding claims,
**characterised in that**
a cleaning device (23) is provided, which removes bonemeal that is deposited on the blade (3) in a peripheral region of the blade (3) located outside the forming tube cross-section (e.g. 1.2'), in particular in depressions (21) and/or apertures (22) of the blade (3), and which in particular comprises a compressed air nozzle (23b) and/or a brush (23a).

11. Cutting machine according to any of the preceding claims,
**characterised in that**
the cutting machine comprises a cube enclosure (16) having intersecting enclosure blades (16a, b), which can be introduced, in particular pushed radially, as an insertion part (25), into a recess (24) of the forming tube turret (1) that is open towards the periphery of the forming tube turret (1).

12. Cutting machine according to any of the preceding claims,
**characterised in that**
the cutting machine comprises an intermediate plate (17) which can be introduced, in particular pushed radially into a recess (24) of the forming tube turret (1) and/or of the cube enclosure (16).

13. Cutting machine according to any of the preceding claims,
**characterised in that**
- the forming tube turret (1) consists of a plurality of turret discs which follow one another in the axial direction (10),
- in particular a turret disc, as an additional disc, comprises the recess (24) for the cube enclosure (16) and/or the intermediate plate (17), preferably for both,
- the additional disc is designed such that it can be added on the cutting end (1a) after axial displacement of the forming tube turret (1), and can be connected to the forming tube turret (1), without dismantling the forming tube turret (1).

## Revendications

1. Machine de coupe pour découper une miche (100) de matériau élastique en tranches (101), comprenant
- un châssis de base,
- une tourelle à tubes de formage (1) montée dans le châssis de base de manière à pouvoir tourner autour d'un axe de rotation (1'), dans laquelle sont disposées plusieurs ouvertures de tube de formage (1.1 - 1.5) s'étendant dans la direction axiale (10) de la tourelle à tubes de formage (1) et ouvertes des deux côtés sur le plan frontal, destinées à recevoir chacune une miche (100),
- un entraînement de pressage longitudinal (6) qui peut appliquer une force sur le châssis de base à un endroit du contour périphérique de la tourelle à tubes de formage (1) dans la direction axiale (10) pour l'introduction axiale d'un poinçon de pressage longitudinal (4.1 - 4.5) dans le tube de formage (1.1) se trouvant à cet endroit depuis l'extrémité de chargement (1b) et la poussée vers l'avant ainsi que le pressage longitudinal de la miche (100) s'y trouvant en direction de l'extrémité de coupe (1a) de la tourelle à tubes de formage (1),
- un dispositif de coupe (2) avec un couteau (3), qui est disposé devant l'extrémité de coupe (2a) de la tourelle à tubes de formage (1) et qui peut être déplacé dans la direction radiale (11) par rapport à la la tourelle à tubes de formage (1),
- un poinçon de pressage transversal (5.1 - 5.5) respectif disposé sur ou dans les ouvertures du tube de formage (1.1 - 1.5), lequel peut être déplacé dans la direction radiale (11.1) de la section transversale de l'ouverture du tube de formage (1.1 - 1.5),
- un entraînement de pressage transversal (7) pour appliquer une force à un poinçon de pressage transversal (5.1 - 5.5) dans sa direction de déplacement,
**caractérisé en ce que**
l'entraînement de pressage longitudinal (6) et/ou l'entraînement de pressage transversal (7) et/ou le couteau (3) est commandé par la force dans son mouvement.

2. Machine de coupe selon la revendication 1,
**caractérisée en ce que**
- l'entraînement de pressage longitudinal (6) peut être couplé et découplé avec l'un des poinçons de pressage longitudinal (4.1 - 4.5)
et/ou
- l'entraînement de pressage transversal (7) peut être couplé et découplé avec l'un des poinçons de pressage transversal (5.1 - 5.5)
et/ou
- de préférence, seul l'entraînement de pressage longitudinal (6) et/ou l'entraînement de pressage transversal (7) sont commandés par la force.

3. Machine de coupe selon l'une des revendications précédentes,
**caractérisée en ce que**
- l'entraînement de pressage transversal (7) est présent à, en particulier uniquement à, la position de coupe (12)
et/ou
- le poinçon de pressage transversal respectif (5.1 - 5.5)
- soit est disposé radialement à l'intérieur de l'ouverture du tube de formage (par ex. 1.1),
- soit sa surface de pressage orientée radialement vers l'intérieur de la section transversale de l'ouverture du tube de formage (1.1 - 1.5) fait partie intégrante de la paroi périphérique du tube de formage (1.1, 1.2, 1.3) qui est ainsi en plusieurs parties.

4. Machine de coupe selon l'une des revendications précédentes,
**caractérisée en ce que**
- soit le couteau (3) est un couteau (3) mobile linéairement, en particulier un couteau (3) en forme de bande sans fin ou un couteau (3) en forme de plaque sans fin,
- soit le couteau (3) est un couteau rotatif (3), qui tourne en particulier autour d'un axe de couteau (3') parallèle à la direction axiale (10) et qui présente en particulier une périphérie circulaire qui est conçue comme un tranchant (3a).

5. Machine de coupe selon l'une des revendications précédentes,
**caractérisée en ce que**
l'axe de couteau (3') est monté dans un bras oscillant ou dans un chariot (19) mobile dans la direction radiale (11).

6. Machine de coupe selon l'une des revendications précédentes,
**caractérisée en ce que**
- le dispositif de coupe (2) comprend une fermeture rapide (20), en particulier une fermeture centrale (20), pour fixer le couteau (3) sur le dispositif de coupe (2), en particulier sur l'axe de couteau (3'),
- qui permet en particulier de changer le couteau (3) en moins de 30 s et sans outil.

7. Machine de coupe selon l'une des revendications précédentes,
**caractérisée en ce que**
- le poinçon de pressage longitudinal respectif (4.1 - 4.5) est fixé de manière amovible à l'entraînement de pressage longitudinal (6), en particulier à sa tige de piston (6a), et
- un poinçon de pressage longitudinal respectif (4.1 - 4.5) adapté à l'une des ouvertures du tube de formage est disposé de manière amovible sur ou dans une tourelle à poinçons de pressage (13) rotative,
- dans lequel la tourelle à poinçons de pressage (13) peut être tourné de manière commandée autour d'un axe de rotation (13') parallèle à l'axe de rotation (1') de la tourelle à tubes de formage (1) et espacé de celui-ci.

8. Machine de coupe selon l'une des revendications précédentes,
**caractérisée en ce que**
il est prévu un élément de butée (14), en particulier une plaque de butée (14), pour la miche (100), qui
- est disposé avec son plan principal de manière transversale, en particulier perpendiculaire, à la direction axiale (10),
- est réglable dans sa distance axiale (A) par rapport à l'extrémité de coupe (2a) de la tourelle à tubes de formage (1),
- est couplée, en particulier de manière amovible, à l'axe de couteau (3').

9. Machine de coupe selon l'une des revendications précédentes,
**caractérisée en ce que**
l'élément de butée (14)
- est réglable en distance radiale par rapport à l'axe de couteau (3') et/ou
- peut être découplé de l'axe de couteau (3') et/ou du couteau (3), en particulier automatiquement dans une position déterminée de l'axe de couteau (3').

10. Machine de coupe selon l'une des revendications précédentes,
**caractérisée en ce que**
il existe un dispositif de nettoyage (23) qui élimine la farine d'os déposée sur le couteau (3) dans une zone périphérique du couteau (3) située à l'extérieur de la section transversale du tube de formage (par exemple 1.2'), en particulier dans des creux (21) et/ou des percées (22) du couteau (3), et qui comprend en particulier une buse d'air comprimé (23b) et/ou une brosse (23a).

11. Machine de coupe selon l'une des revendications précédentes,
**caractérisée en ce que**
la machine de coupe comprend une grille cubique (16) avec des couteaux de grille (16a, b) qui se croisent, qui peut être insérée, en particulier radialement, en tant que pièce d'insertion (25) dans un évidement (24) de la tourelle à tubes de formage (1) ouvert vers la périphérie de la tourelle à tubes de formage (1), en particulier qui peut être insérée radialement.

12. Machine de coupe selon l'une des revendications précédentes,
**caractérisée en ce que**
la machine de coupe comprend une plaque intermédiaire (17) qui peut être introduite, en particulier radialement, dans un évidement (24) de la tourelle à tubes de formage (1) et/ou de la grille cubique (16), en particulier peut être insérée radialement.

13. Machine de coupe selon l'une des revendications précédentes,
**caractérisée en ce que**
- la tourelle à tubes de formage (1) est constituée de plusieurs disques de tourelle se succédant dans la direction axiale (10),
- en particulier, un disque de tourelle comprend, en tant que disque supplémentaire, l'évidement (24) pour la grille cubique (16) et/ou la plaque intermédiaire (17), de préférence pour les deux,
- le disque supplémentaire est conçu de telle sorte qu'il peut être ajouté à l'extrémité de coupe (1a) après le déplacement axial de la tourelle à tubes de formage (1) et être relié à la tourelle à tubes de formage (1) sans démonter la tourelle à tubes de formage (1).
